# EUROPEAN PATENT SPECIFICATION

(11) **EP 3 330 656 B1**
(45) Date of publication and mention of the grant of the patent: **19.05.2021**
(21) Application number: 16832055.4
(22) Date of filing: 29.01.2016
(51) Int. Cl.: F28D 20/02, F28F 13/12

(54) **PHASE CHANGE HEAT STORAGE DEVICE**
PHASENWECHSELWÄRMESPEICHERVORRICHTUNG
DISPOSITIF DE STOCKAGE DE CHALEUR À CHANGEMENT DE PHASE

(30) Priority: 31.07.2015 CN 201520570336 U
(43) Date of publication of application: 06.06.2018
(73) Proprietor: Pioneer Energy (Jiangsu) Co., Ltd, Zhangjiagang City, Suzhou, Jiangsu 215600 (CN)
(72) Inventor: SUN, Li, Suzhou Jiangsu 215600 (CN); WANG, Hong, Suzhou Jiangsu 215600 (CN); LIU, Xiaolong, Suzhou Jiangsu 215600 (CN); WANG, Changjun, Suzhou Jiangsu 215600 (CN)
(74) Representative: Winter, Brandl - Partnerschaft mbB
(86) International application number: PCT/CN2016/072751
(87) International publication number: WO 2017/020566

(56) References cited:
- EP-A1- 1 235 046
- EP-A2- 1 975 537
- WO-A1-2015/072503
- CN-A- 1 719 185
- CN-A- 103 090 712
- CN-A- 103 185 367
- CN-A- 105 021 076
- CN-U- 201 787 846
- CN-U- 202 885 621
- CN-U- 204 902 647
- DE-A1-102011 054 342

## Description

### BACKGROUND OF THE INVENTION

### Technical field

The present invention relates to the field of heat storage, in particular to a phase change heat storage device.

### 2. Description of the Related Art

Existing phase change heat storage devices are still immature in structural design of lining and coiled pipe components, so the internal heat exchange components in the heat storage devices exchange heat non-uniformly, and the utilization of phase change materials are insufficient, so the existing phase change heat storage devices have a low heat exchange efficiency, indirectly increasing the production cost of the devices. The existing phase change heat storage devices have the defect that welds between the pipes in the heat exchange component and the main flow path are soaked in the phase change materials, thus the welds become corroded by the phase change materials and generate fatal damage, and the welded parts soaked in the phase change materials are inconveniently maintained after being damaged, causing a relatively short service life to the existing phase change heat storage devices. Finally, the choices of users are affected.

Document CN 202 885 621 U relates to a heat storage unit applied to medium-low temperature, in particular to a medium-low temperature heat storage unit aiming to improving efficiency of heat releasing and heat storage, and particularly to the medium-low temperature heat storage unit. The medium-low temperature heat storage unit comprises a heat storage shell, a heat exchanger, a heat exchanger and a phase change heat storage material which are all arranged in the heat storage shell. The medium-low temperature heat storage unit is characterized in that heat exchanging pipes comprise a circumfluence type heat storage and exchanging pipe, and heat-carrying working medium enters a heat storage body through a heat source inlet to store heat in the phase change heat storage material; the heat exchanging pipes further comprise a circumfluence type heat releasing and exchanging pipe, and heat-releasing working medium enters the heat storage body from a cold source inlet through a cold source to absorb latent heat and sensible heat of the phase change heat storage material and discharge heat out of a cold source; and the circumfluence type heat storage and exchanging pipe and the circumfluence type heat releasing and exchanging pipe are arranged independently each other. With the adoption of the technical scheme, structure of the heat exchanger can be changed and heat exchanging efficiency can be improved.

Further, document EP 1 975 537 A2 relates to a process for the continuous melting of inorganic salts and to a furnace plant for carrying out the process.

### BRIEF SUMMARY OF THE INVENTION

The objective of the present invention is to provide a phase change heat storage device which has a high heat exchange efficiency and a long service life to overcome defects in the prior art.

The objective of the present invention can be fulfilled by the following technical solution:

A phase change heat storage device includes a housing, wherein the housing is internally provided with a lining; an insulating layer is disposed between the lining and the housing; the lining is internally filled in with a phase change material; a coiled pipe is embedded in the phase change material; the inlet and outlet of the coiled pipe both extend out of the lining and are respectively welded with and communicate with a main water inflow pipe and a main water outflow pipe, so all welds between the coiled pipe and the main water inflow pipe and main water outflow pipe are positioned outside the lining and are not soaked by the phase change material.

The lining is provided with at least one partition board; the partition board divides the inner space of the lining into independent spaces such that the phase change material is respectively positioned in the independent spaces divided by the partition board, thus improving the heat exchange efficiency of the phase change heat storage device and prolonging the service life of the phase change material.

The partition board is formed with a through-hole wherein the coiled pipe runs through, and the partition board is held at the middle portion of the coiled pipe.

The device is also provided with a pneumatic stirring mechanism which pneumatically stirs the phase change material.

The lining is formed with a vent hole, which communicates with the external air, at the top end, ensuring that the whole device works under normal pressure.

A temperature detecting blind pipe for measuring the temperature of the phase change material is embedded in the phase change material, and disposed on a line which connects the central hole of the device and a corner edge.

The coiled pipe is a copper pipe.

The insulating layer is any one or any combination of several ones of a foamed polyurethane layer, an aerogel insulating layer, an inorganic nano insulating layer and a VIP vacuum insulating board.

In a particular non claimed arrangement, the housing shape can be cylindrical, square or plate-like.

A base is disposed below the housing.

The phase change heat storage device can achieve the following functions in actual applications.

Heat charging: industrial waste heat or boiler heat is used to heat water; then the hot water flows through the coiled pipe to heat the phase change materials; after the phase change materials absorb the heat, the temperature gradually rises to the phase-change temperature point; phase change material changes in phase and continuously absorbs heat; after the phase is completely changed, the material can continuously absorb the heat and rise in temperature. Thus, the heat storage process is completed.

Heat release: when hot water is needed, a valve switch is controlled to drive cold water to flow through the coiled pipe, and the cold water absorbs heat from the heat exchange material to become hot water which can be used by people, achieving the instant heating function. As the cold water continuously absorbs heat, the temperature of the phase change material drops, and the phase change material changes phase at the phase-change temperature point and releases latent heat. During and after the phase change, the temperature of the phase change material drops continuously and the phase change material releases heat, completing the heat release process.

Compared with the prior art, the phase change heat storage device of the present invention optimizes the design structure of the coiled pipe component for heat exchange, avoiding the defect that the welds in the existing phase change heat storage device are soaked in the phase change material. The present invention makes the post-maintenance of the phase change heat storage device more convenient and feasible and prolongs the service life of the phase change heat storage device. Moreover, the lining is internally provided with the partition board which divides the phase change material into multiple sections, improving the heat exchange effect of the phase change heat storage device and reducing the production cost of the phase change heat storage device. The present invention employs additional reinforcing structures and protective measures, ensuring the stability and use safety of the phase change heat storage device during working.

The present invention has a simple structure design, solves the defects of existing phase change heat storage devices, greatly improves the heat exchange effect of the phase change heat storage device, reduces the production cost of the device, and prolongs the service life of the device.

### BRIEF DESCRIPTION OF THE SEVERAL VIEWS OF THE DRAWINGS

FIG. 1 is a structural view of a phase change heat storage device of the present invention;
FIG.2 is a structural view of a coiled pipe in the lining.

In the figures, 1-housing; 2-insulating layer; 3-lining; 4- phase change material; 5-coiled pipe; 6-temperature detecting blind pipe; 7-partition board; 8-base; 9-vent hole; 10-main water inflow pipe; 11-main water outflow pipe.

### DETAILED DESCRIPTION OF THE INVENTION

The present invention is described in detail with reference to the attached drawings and embodiment.

### Embodiment

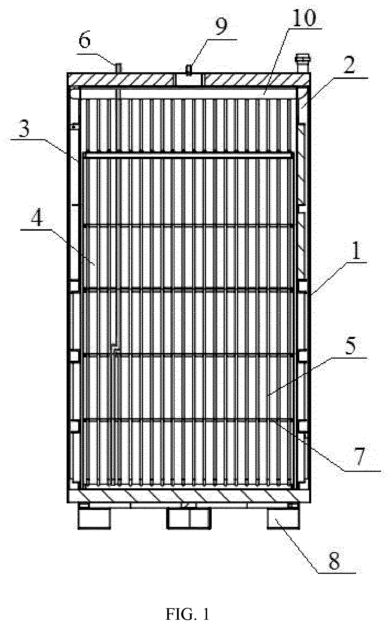

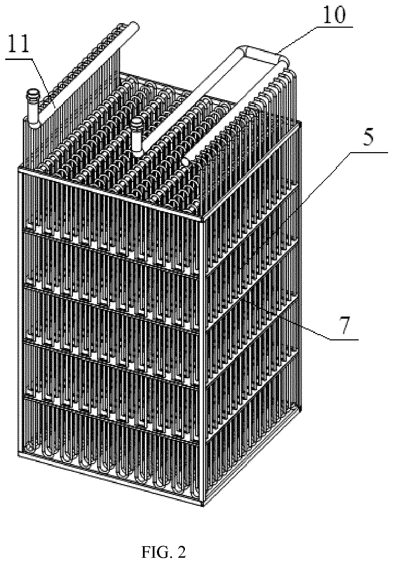

A phase change heat storage device, as shown in FIG.1 and FIG.2, includes a housing 1, wherein the housing 1 is internally provided with a lining 3; an insulating layer 2 is disposed between the lining 3 and the housing 1; the lining 3 is internally filled in with a phase change material 4; a coiled pipe 5 is embedded in the phase change material 4; the inlet and outlet of the coiled pipe 5 both extend out of the lining 3 and are respectively welded with and communicate with a main water inflow pipe 10 and a main water outflow pipe 11, so all welds between the coiled pipe 5 and the main water inflow pipe 10 and main water outflow pipe 11 are positioned outside the lining 3 and are not soaked by the phase change material 4. In the present invention, the lining is provided with at least one partition board 7; the partition board 7 divides the inner space of the lining 3 into independent spaces such that the phase change material 4 is respectively positioned in the independent spaces divided by the partition board 7, thus improving the heat exchange efficiency of the phase change heat storage device and prolonging the service life of the phase change material. The partition board 7 is formed with a through-hole which the coiled pipe 5 runs through, and the partition board 7 is held at the middle portion of the coiled pipe 5. The coiled pipe 5 is a copper pipe. The lining 3 is formed with a vent hole 9, which communicates with the external air, at the top end, ensuring that the whole device works under normal pressure. The housing shape can be cylindrical, square or plate-like. A base 8 is disposed below the housing 1.

The insulating layer 2 is any one or any combination of several ones of a foamed polyurethane layer, an aerogel insulating layer, an inorganic nano insulating layer and a VIP vacuum insulating board. Upon demands, the device is also provided with a pneumatic stirring mechanism which pneumatically stirs the phase change material 4. A temperature detecting blind pipe 6 for measuring the temperature of the phase change material is embedded in the phase change material 4, and disposed on a line which connects the central hole of the device and a corner edge.

The phase change heat storage device of the present invention can achieve the following functions in actual applications.

Heat charging: industrial waste heat or boiler heat is used to heat water; then the hot water flows through the coiled pipe to heat the phase change materials; after the phase change materials absorb the heat, the temperature gradually rises to the phase-change temperature point; phase change material changes in phase and continuously absorbs heat; after the phase is completely changed, the material can continuously absorb the heat and rise in temperature. Thus, the heat storage process is completed.

Heat release: when hot water is needed, a valve switch is controlled to drive cold water to flow through the coiled pipe, and the cold water absorbs heat from the heat exchange material to become hot water which can be used by people, achieving the instant heating function. As the cold water continuously absorbs heat, the temperature of the phase change material drops, and the phase change material changes phase at the phase-change temperature point and releases latent heat. During and after the phase change, the temperature of the phase change material drops continuously and the phase change material releases heat, completing the heat release process.

With the description of the above embodiments, those ordinarily skilled in the art can understand and use the present invention. Those skilled in the art can easily make various amendments to the embodiments and apply the general principle described here to other embodiments without inventive labor. Therefore, the present invention is not limited to the above embodiments. All improvements and amendments made by those skilled in the art according to the enlightenment of the present invention should fall within the protective scope of the present invention as defined in the appended claims.

## Claims

1. A phase change heat storage device, comprising a housing (1), wherein the housing (1) is internally provided with a lining (3), an insulating layer (2) is disposed between the lining (3) and the housing (1); the lining (3) is internally filled in with a phase change material (4); a coiled pipe (5) is embedded in the phase change material (4); wherein the inlet and outlet of the coiled pipe (5) both extend out of the lining (3) and are respectively welded with and communicate with a main water inflow pipe (10) and a main water outflow pipe (11), wherein the lining is internally provided with at least one partition board (7); the partition board (7) divides the inner space of the lining (3) into independent spaces such that the phase change material (4) is respectively positioned in the independent spaces divided by the partition board (7), thus improving the heat exchange efficiency of the phase change heat storage device and prolonging the service life of the phase change material.

2. The phase change heat storage device according to claim 1, **characterized in that** the partition board (7) is formed with a through-hole which the coiled pipe (5) runs through, and the partition board (7) is held at the middle portion of the coiled pipe (5).

3. The phase change heat storage device according to claim 1, **characterized in that** a pneumatic stirring mechanism which pneumatically stirs the phase change material (4) is also provided.

4. The phase change heat storage device according to claim 1, **characterized in that** the lining (3) is formed with a vent hole (9), which communicates with the external air, at the top end.

5. The phase change heat storage device according to claim 1, **characterized in that** a temperature detecting blind pipe (6) for measuring the temperature of the phase change material is embedded in the phase change material (4), and disposed on a line which connects the central hole of the device and a corner edge.

6. The phase change heat storage device according to claim 1, **characterized in that** the coiled pipe (5) is a copper pipe.

7. The phase change heat storage device according to claim 1, **characterized in that** the insulating layer (2) is any one or any combination of several ones of a foamed polyurethane layer, an aerogel insulating layer, an inorganic nano insulating layer and a VIP vacuum insulating board.

8. The phase change heat storage device according to claim 1, **characterized in that** a base (8) is disposed below the housing (1).

## Patentansprüche

1. Phasenwechsel-Wärmespeichervorrichtung mit einem Gehäuse (1), wobei das Gehäuse (1) innen mit einer Beschichtung (3) versehen ist, eine Isolierschicht (2) zwischen der Beschichtung (3) und dem Gehäuse (1) angeordnet ist; die Beschichtung (3) innen mit einem Phasenwechselmaterial (4) ausgefüllt ist; ein gewickeltes Rohr (5) in das Phasenwechselmaterial (4) eingebettet ist, wobei ein Einlass und ein Auslass des gewickelten Rohrs (5) sich beide aus der Beschichtung (3) heraus erstrecken und jeweils mit einem Hauptwasserzuflussrohr (10) und einem Hauptwasserabflussrohr (11) verschweißt sind und mit diesen in Verbindung stehen; wobei die Beschichtung innen mit mindestens einer Trennplatte (7) versehen ist; die Trennplatte (7) einen Innenraum der Beschichtung (3) in unabhängige Räume derart unterteilt, dass das Phasenwechselmaterial (4) jeweils in den durch die Trennplatte (7) unterteilten unabhängigen Räumen positioniert ist, wodurch die Wärmeaustauscheffizienz der Phasenwechsel-Wärmespeichervorrichtung verbessert und eine Lebensdauer des Phasenwechselmaterials verlängert wird.

2. Phasenwechsel-Wärmespeichervorrichtung nach Anspruch 1, **dadurch gekennzeichnet, dass** die Trennplatte (7) mit einem Durchgangsloch ausgebildet ist, durch das das gewickelte Rohr (5) verläuft, und die Trennplatte (7) an einem mittleren Abschnitt des gewickelten Rohrs (5) gehalten ist.

3. Phasenwechsel-Wärmespeichervorrichtung nach Anspruch 1, **dadurch gekennzeichnet, dass** zusätzlich ein pneumatischer Rührmechanismus vorgesehen ist, der das Phasenwechselmaterial (4) pneumatisch rührt.

4. Phasenwechsel-Wärmespeichervorrichtung nach Anspruch 1, **dadurch gekennzeichnet, dass** die Beschichtung (3) am oberen Ende mit einer Entlüftungsöffnung (9) ausgebildet ist, die mit einer Außenluft in Verbindung steht.

5. Phasenwechsel-Wärmespeichervorrichtung nach Anspruch 1, **dadurch gekennzeichnet, dass** ein Temperaturerfassungs-Blindrohr (6) zum Messen einer Temperatur des Phasenwechselmaterials in das Phasenwechselmaterial (4) eingebettet ist und auf einer Linie angeordnet ist, die das zentrale Loch der Vorrichtung und eine Eckkante verbindet.

6. Phasenwechsel-Wärmespeichervorrichtung nach Anspruch 1, **dadurch gekennzeichnet, dass** das gewickelte Rohr (5) ein Kupferrohr ist.

7. Phasenwechsel-Wärmespeichervorrichtung nach Anspruch 1, **dadurch gekennzeichnet, dass** die Isolierschicht (2) eine beliebige oder eine beliebige Kombination von mehreren aus einer geschäumten Polyurethanschicht, einer Aerogel-Isolierschicht, einer anorganischen Nano-Isolierschicht und einer VIP-Vakuum-Isolierplatte ist.

8. Phasenwechsel-Wärmespeichervorrichtung nach Anspruch 1, **dadurch gekennzeichnet, dass** unterhalb des Gehäuses (1) ein Sockel (8) angeordnet ist.

## Revendications

1. Dispositif de stockage de chaleur à changement de phase, comprenant un boîtier (1), dans lequel le boîtier (1) est pourvu intérieurement d'un revêtement (3), une couche d'isolation (2) est disposée entre le revêtement (3) et le boîtier (1) ; le revêtement (3) est rempli intérieurement d'un matériau à changement de phase (4) ; un tuyau enroulé (5) est intégré dans le matériau à changement de phase (4) ; dans lequel l'entrée et la sortie du tuyau enroulé (5) s'étendent toutes deux hors du revêtement (3) et sont respectivement soudées et communiquent avec un tuyau principal d'arrivée d'eau (10) et un tuyau principal de sortie d'eau (11), dans lequel le revêtement est pourvu intérieurement d'au moins une plaque de séparation (7) ; la plaque de séparation (7) divise l'espace intérieur du revêtement (3) en espaces indépendants de telle sorte que le matériau à changement de phase (4) est respectivement positionné dans les espaces indépendants divisés par la plaque de séparation (7), en améliorant ainsi l'efficacité d'échange de chaleur du dispositif de stockage de chaleur à changement de phase et en prolongeant la durée de vie du matériau à changement de phase.

2. Dispositif de stockage de chaleur à changement de phase selon la revendication 1, **caractérisé en ce que** la plaque de séparation (7) est formée avec un trou traversant traversé par le tuyau enroulé (5), et la plaque de séparation (7) est maintenue au niveau de la partie médiane du tuyau enroulé (5).

3. Dispositif de stockage de chaleur à changement de phase selon la revendication 1, **caractérisé en ce qu'**un un mécanisme d'agitation pneumatique qui agite le matériau à changement de phase (4) de manière pneumatique est également prévu.

4. Dispositif de stockage de chaleur à changement de phase selon la revendication 1, **caractérisé en ce que** le revêtement (3) est formé avec un trou d'aération (9), qui communique avec l'air extérieur, au niveau de l'extrémité supérieure.

5. Dispositif de stockage de chaleur à changement de phase selon la revendication 1, **caractérisé en ce qu'**un tuyau aveugle de détection de température (6) pour mesurer la température du matériau à changement de phase est intégré dans le matériau à changement de phase (4), et disposé sur une ligne qui relie le trou central du dispositif et un bord d'angle.

6. Dispositif de stockage de chaleur à changement de phase selon la revendication 1, **caractérisé en ce que** le tuyau enroulé (5) est un tuyau en cuivre.

7. Dispositif de stockage de chaleur à changement de phase selon la revendication 1, **caractérisé en ce que** la couche d'isolation (2) est une quelconque ou toute combinaison de plusieurs parmi une couche de polyuréthane expansé, une couche d'isolation d'aérogel, une couche nano isolante minérale et un panneau isolant sous vide, VIP.

8. Dispositif de stockage de chaleur à changement de phase selon la revendication 1, **caractérisé en ce qu'**une embase (8) est disposée sous le boîtier (1).
